# EUROPÄISCHE PATENTSCHRIFT

(11) **EP 0 553 453 B1**
(45) Veröffentlichungstag und Bekanntmachung des Hinweises auf die Patenterteilung: **25.10.1995**
(21) Anmeldenummer: 92120982.1
(22) Anmeldetag: 08.12.1992
(51) Int. Cl.: A47J 47/16, A47B 96/06, A47F 5/08

(54) **Haltevorrichtung zum Halten von im Haushalt zu verwendenden Ablage- oder Tragteilen**
Support for domestic stands or holders
Dispositif porteur pour des supports ou plateaux ménagers

(30) Priorität: 16.01.1992 DE 9200424 U
(43) Veröffentlichungstag der Anmeldung: 04.08.1993
(73) Patentinhaber: Zeyko GmbH Kopp + Zeyher, D-75382 Althengstett (DE)
(72) Erfinder: Dittus, Hans-Gerd, W-7265 Neubulach (DE); Klein, Gottfried, W-7262 Althengstett (DE); von Kéler, Martin, W-7262 Althengstett (DE)
(74) Vertreter: Reimold, Otto, Dipl.-Phys.Dr.

(56) Entgegenhaltungen:
- DE-A- 3 710 485
- DE-B- 1 189 689
- GB-A- 2 207 853
- US-A- 4 226 394
- US-A- 4 653 818
- US-A- 4 809 941
- GB-A-M14313 (G.R. MEYERCORD)

## Beschreibung

Die Erfindung betrifft eine Haltevorrichtung zum Halten von im Haushalt, insbesondere in der Küche, zum Ablegen oder Tragen von Gegenständen zu verwendenden Ablage- oder Tragteilen, beispielsweise ein Schneid- oder Ablagebrett, eine Schale, ein Besteckhalter, ein Messerhalter, ein Papierrollenhalter, ein Flaschenhalter usw., an einer Wand, gemäß Oberbegriff des Anspruchs 1.

Vom Regalbau her ist es bekannt, von einer Tragkonstruktion in horizontaler Richtung abstehende Arme zum Aufhängen von Gegenständen (GB-A-2207853) oder zum Auflegen von Regalbrettern od. dgl. (US-A-4809941) zu verwenden.

Ferner ist es aus der Praxis bekannt, in der Küche benötigte Ablage- oder Tragteile mit Hilfe einer Haltevorrichtung an der Küchenwand, insbesondere im Bereich der Nische zwischen Unterschrank und Oberschrank, aufzuhängen, indem die Haltevorrichtung eine der Wand entlang in horizontaler Richtung zu befestigende Stange und an den Ablage- oder Tragteilen an die Stange hängbare Haltehaken enthält.

Ausgehend hiervon liegt der vorliegenden Erfindung die Aufgabe zugrunde, ein hinsichtlich der Unterbringung der Ablage- oder Tragteile variableres System zu schaffen, so daß die Ablage- oder Tragteile nicht nur an der Wand sondern ohne besonderen Aufwand auch an einer anderen Stelle, so vor allem in einem Schrank, angeordnet werden können. Dabei soll die Handhabung, d.h. das Wegnehmen und Anbringen der Ablage- oder Tragteile an dem jeweiligen Ort einfach sein. Ferner sollen die Herstellungskosten möglichst niedrig gehalten werden.

Diese Aufgabe wird erfindungsgemäß dadurch gelöst, daß die Haltevorrichtung zwei beiderseits des jeweiligen Ablage- oder Tragteils angeordnete und mit dem jeweiligen Ablage- oder Tragteil zu einer Einheit verbundene Abstützpartien aufweist, wobei die Abstützpartien lose auf die Haltebolzen auflegbar sind und ein in Gebrauchslage nach unten gerichtetes, vom jeweils entgegengesetzten Haltebolzen aus gesehen den betreffenden Haltebolzen hintergreifendes Hintergreifelement zur seitlichen Lagesicherung des Ablage- oder Tragteils aufweisen, und daß die Unterseite der Hintergreifelemente eine Aufstellfläche bildet, derart, daß die von dem jeweiligen Ablage- oder Tragteil und den Abstützpartien gebildete Einheit unabhängig von den Haltebolzen mit den Hintergreifelementen auf eine Unterlage, insbesondere auf in einem Schrank an den Seitenwänden angeordnete Unterlagenteile wie Leisten od.dgl., stellbar ist.

Die mit solchen Abstützpartien versehenen Ablage- oder Tragteile werden also einfach durch Absenken auf die Haltebolzen oder die anderen Unterlagenteile am gewünschten Ort abgesetzt. Irgendwelche Handhabungschwierigkeiten treten dabei nicht auf, da die Haltebolzen im Zusammenwirken mit den Hintergreifelementen gleichzeitig sozusagen eine Zentrierung bilden. Im Falle der Unterbringung in einem Schrank wird diese Funktion von den Schrank-Seitenwänden übernommen.

Es ist ohne weiteres ersichtlich, daß sich die mit den erfindungsgemäßen Abstützpartien ausgestatteten Einheiten überall aufstellen lassen, wenn ein Zwischenraum vorhanden ist, in dem ein evtl. vorhandener, nach unten hin vorstehender Bereich des Ablage- oder Tragteils Platz hat. Die Variabilität kommt beispielsweise dadurch zum Ausdruck, daß man nunmehr eine Obstschale aus einem Schrank entnehmen kann, wonach das Obst gewaschen und die Obstschale mit dem darauf liegenden Obst zum Abtropfen in der Nische zwischen Oberschrank und Unterschank auf den zugehörigen Haltebolzen abgestellt wird.

Ein weiterer Vorteil besteht darin, daß der mit den Abstützpartien verbundene Herstellungsaufwand verhältnismäßig gering ist. Ausserdem können sie so gestaltet werden, daß sie den optischen Eindruck der jeweiligen Einheit nicht beeinträchtigen sondern eher noch fördern, was vor allem dann von besonderer Bedeutung ist, wenn es sich um ein Ablageteil handelt, das man wie im Falle einer Schale od.dgl. auch sonstwo, beispielsweise auf einem Tisch, aufstellen kann.

Ausführungsbeispiele der Erfindung sowie zweckmäßige Ausgestaltungen werden nun anhand der Zeichnung im einzelnen erläutert. Es zeigen:
- Fig. 1: die zwischen einem Unterschrank und einem Oberschrank befindliche Nische einer Einbauküche mit einer erfindungsgemäßen Haltevorrichtung zusammen mit einer Besteckhaltereinheit in schematischer Schrägansicht,
- Fig. 2: die Haltevorrichtung mit der Besteckhaltereinheit (die einzelnen Besteckköcher wurden der Übersichtlichkeit wegen weggelassen) in Seitenansicht gemäß Pfeil II in Fig. 1, teilweise geschnitten, wobei die Besteckhaltereinheit im von den Haltebolzen hochgehobenem Zustand gezeigt ist,
- Fig. 3: die Besteckhaltereinheit in Vorderansicht gemäß Pfeil III in Fig. 1, wobei die Haltebolzen strichpunktiert angedeutet sind,
- Fig. 4: eine der Fig. 3 entsprechende Vorderansicht, wobei die Besteckhaltereinheit hier in einen Schrank eingestellt ist, und
- Fig. 5 bis 10: jeweils die Schrägansicht einer Schneid- oder Ablagebretteinheit, einer Schaleneinheit, einer Messerhaltereinheit, einer Flaschenhaltereinheit, einer Papierrollenhaltereinheit mit eingelegter Papierrolle bzw. einer Ablagebrett/Schubkasteneinheit.

Allen dargestellten Einheiten ist gemeinsam, daß auf oder in ihnen Gegenstände des Haushalts, einschließlich Nahrungsmittel, abgelegt werden können, und daß sie zum Tragen solcher Gegenstände ausgebildet sind. Dabei setzt sich jede Einheit aus einem die Ablage- oder Tragfunktion erfüllenden Ablage- oder Tragteil sowie aus der ablage- oder tragteilseitigen "Hälfte" der die Einheit am vorgesehenen Ort haltenden Haltevorrichtung zusammen.

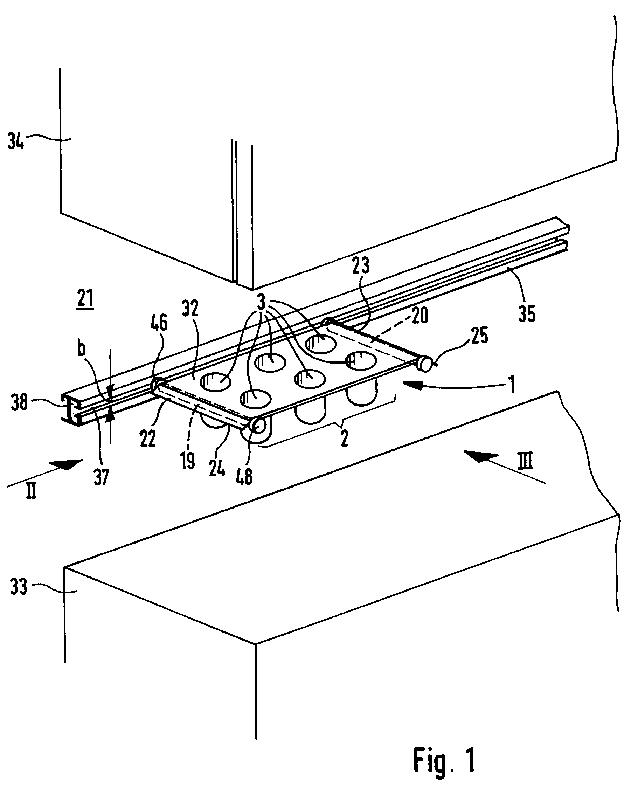

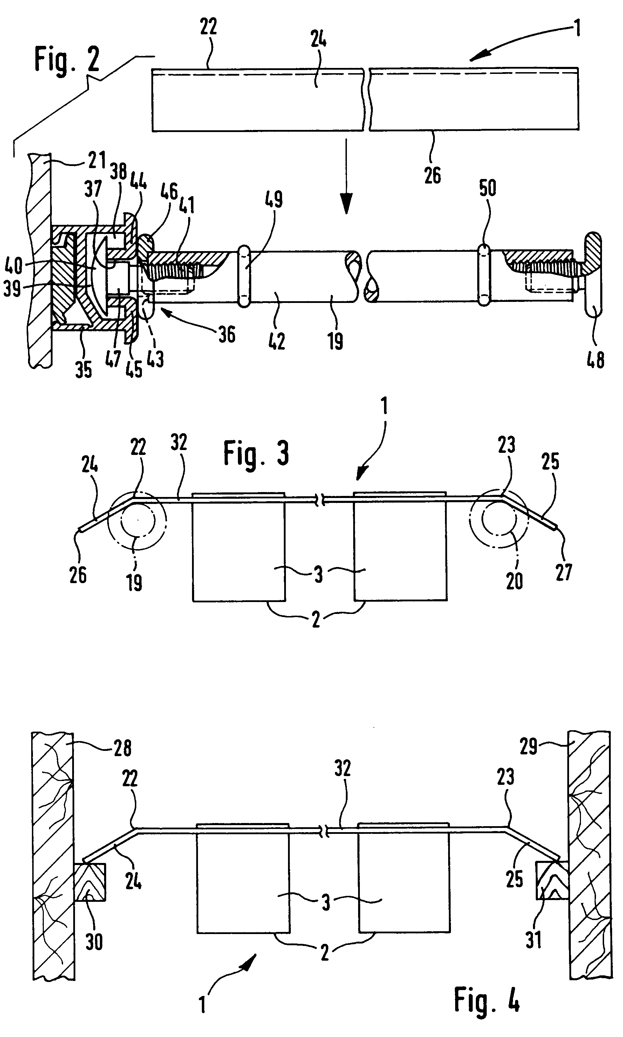

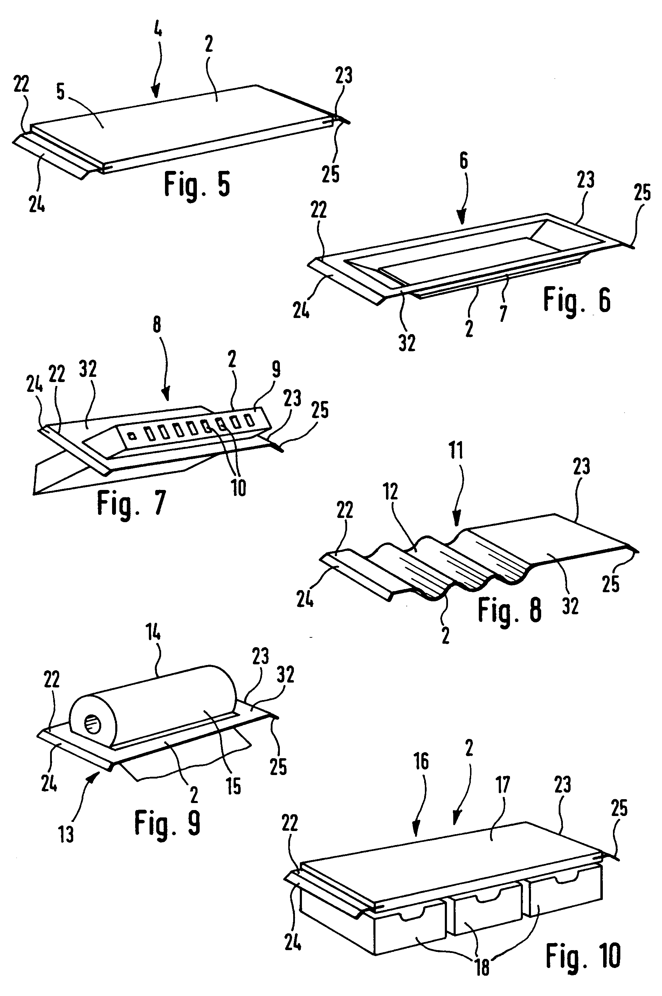

Im Falle der Besteckhaltereinheit 1 der Fig. 1 bis 4 wird also das Ablage- oder Tragteil 2 von der Gesamtheit der Besteckköcher 3 gebildet, in die Besteckteile eingestellt werden können. Bei der Bretteinheit 4 der Fig. 5 wird das Ablage- oder Tragteil 2 von dem Brett 5, auf dem beliebige Dinge abgelegt oder Nahrungsmittel geschnitten werden können, gebildet. Im Falle der Schaleneinheit 6 der Fig. 6 ist die Schale 7, in die man Obst oder sonstige Dinge stellen kann, das Ablage- oder Tragteil 2. Die Messerhaltereinheit 8 der Fig. 7 weist einen Messerhalterblock 9 als Ablage- oder Tragteil 2 auf, wobei der Messerhalterblock 9 eine etwa quaderförmige Gestalt besitzt und an der dem Benutzer zugewandten Seite offene Einsteckschlitze 10 zum Ablegen von in der Küche benötigten Messern enthält. Im Falle der in Fig. 8 dargestellten Flaschenhaltereinheit 11 wird das Ablage- oder Tragteil 2 von dem der Form von Flaschen entsprechend gewellten Flaschenhalterbereich 12 gebildet, in dessen Wellungen die Flaschen eingelegt werden können. Bei der Papierrollenhalteeinheit 13 der Fig. 9 ist zusätzlich der getragene Gegenstand, d.h. die Papierrolle 14 dargestellt, die von dem Papierrollenhalter 15 als Ablage- oder Tragteil 2 getragen und gelagert wird. Im Falle der Fig. 10 schließlich handelt es sich um eine Ablagebrett/Schubkasteneinheit 16, bei der das Ablage- oder Tragteil 2 von der Kombination eines Ablagebretts 17 mit an dessen Unterseite gehängten Schubkästchen 18 zum Einlegen von irgend-welchen Kleingegenständen gebildet wird.

Es versteht sich, daß dies nur Ausführungsbeispiele für das Ablage- oder Tragteil 2 sind und daß selbstverständlich auch andere Funktionsteile als Ablage- oder Tragteil in Frage kommen, die im Haushalt und dabei insbesondere in der Küche zum Ablegen oder Tragen von Gegenständen, einschließlich Nahrungsmitteln, verwendet werden.

Die Erfindung beschäftigt sich nun mit der zugehörigen Haltevorrichtung, mittels der die Ablage- oder Tragteile 2 an einer Wand gehalten werden können. Hierzu sind für jedes Ablage- oder Tragteil 2 zwei gleich ausgebildete Haltebolzen 19, 20 vorhanden, die mit horizontalem Abstand an der betreffenden Wand 21 festgelegt werden und dabei in ihrer Gebrauchslage im wesentlichen rechtwinkelig von der Wand 21 abstehen. Auf diese beiden Haltebolzen 19, 20 kann die jeweilige Einheit 1,4,6,8,11,13 bzw. 16 gelegt werden. Hierzu ist das jeweilige Ablage- oder Tragteil 2 mit zwei beiderseits der Ablage- oder Tragteils angeordneten Abstützpartien 22,23 verbunden, die Bestandteil der betreffenden Einheit 1,4,6,8, 11,13 bzw. 16 sind. Der Abstand zwischen den Abstützpartien 22,23 entspricht dem Abstand zwischen den beiden Haltebolzen 19,20. Die betreffende Einheit 1,4,6,8,11,13,16 wird also mit diesen Abstützpartien 22,23 lose auf die Haltebolzen 22,23 aufgelegt, so daß die betreffende Einheit ohne irgendwelche Schwierigkeiten an Ort und Stelle gestellt oder von dort weggenommen werden kann. Dabei wird die Einheit ohne Auftreten von Kippmomenten od.dgl. sicher abgestützt, da sich die Abstützpartien 22,23 seitlich an der Funktionseinheit befinden und nicht an deren Rückseite.

Die beiden Abstützpartien 22,23 sind ferner so ausgebildet, daß im Zusammenwirken mit den Haltebolzen 19,2o ein seitliches Verrutschen der jeweiligen Einheit verhindert wird. Hierzu weist jede Abstützpartie 22,23 ein in Gebrauchslage nach unten gerichtetes, vom jeweils entgegengesetzten Haltebolzen aus gesehen den betreffenden Haltebolzen hintergreifendes Hintergreifelement 24 bzw. 25 auf.

Bezüglich der Hintergreifelemente 24, 25 ist die Anordnung ferner so getroffen, daß ihre Unterseite eine Aufstellfläche 26 bzw. 27 bildet, so daß man die jeweilige Einheit 1,4,6,8,11, 13 bzw. 16 auch unabhängig von den Haltebolzen 19, 20 mit den Hintergreifelementen auf eine Unterlage stellen kann. Eine solche Unterlage kann, wie in Fig. 4 angedeutet ist, von in einem Schrank an den Schrankseitenwänden 28,29 angeordneten Unterlagenteilen 30, 31 wie Leisten od.dgl. gebildet werden. Es versteht sich, daß die Unterlagenteile 30,31 in einem Abstand zueinander angeordnet sind, der dem Abstand der Hintergreifelemente 24,25 voneinander, d.h. der Länge der Einheit 1,4,6,8,11,13 bzw. 16 entspricht. Somit besteht die Möglichkeit, die Einheiten 1,4,6,8,11,13 und 16 wahlweise auf den an der Wand 21 befindlichen Haltebolzen 19,20 oder in dem Schrank 28,29 abzustellen. Das Abstellen kann auch sonstwo erfolgen, wenn eine geeignete Unterlage für die beiden Hintergreifelemente 24,25 vorhanden ist. Da sich das Ablage- oder Tragteil 2 je nach seiner Funktion weiter nach unten als die Abstützpartien 22,23 erstrecken kann, sollte der Zwischenraum zwischen den beiden Unterlagenteilen 30,31 frei sein.

Die Hintergreifelemente 24,25 sind ferner zweckmäßigerweise so gestaltet, daß sie gleichzeitig Handgriffe bilden, an denen die Einheit 1,4,6,8,11,13,16 ergriffen und getragen werden kann.

Die Abstützpartien 22,23 weisen zur Bildung der Hintergreifpartien 24,25 eine abgewinkelte oder abgebogene Querschnittsgestalt auf. Im Unterschied zur Zeichnung kann es sich auch um einen rund gebogenen Übergangsbereich handeln.

Der guten Abstützung wegen und um ein möglichst gutes Aussehen zu erhalten, weisen die beiden Abstützpartien 22,23 eine sich in Gebrauchslage längs des betreffenden Haltebolzens 19,20 leistenartig erstreckende Längsgestalt auf. Sie sind also durchgehend ausgebildet und können sich dabei über die gesamte Breitenabmessung der betreffenden Einheit 1,4,6,8,11,13,16 erstrecken.

Ferner ist zweckmäßigerweise vorgesehen, daß die Abstützpartien 22,23 aus Metallblech bestehen.

Die Abstützpartien 22,23 können gesonderte, mit dem Ablage- oder Tragteil 2 fest verbundene Bauteile sein. Dies trifft für die aus den Figuren 5 und 10 hervorgehenden Ausführungsbeispiele zu, bei denen die Abstützpartien abgewinkelte Metallblechstücke sind, die an den seitlichen Enden des Brettes 5 bzw. 17 festgelegt worden sind. Je nach der Art des Ablage- oder Tragteils 2 kann die Anordnung jedoch auch so getroffen sein, daß die beiden Abstützpartien 22,23 einstückig an den seitlichen Enden einer zweckmäßigerweise aus Metallblech bestehenden Formplatte 32 angeordnet sind, die durch entsprechende Formgebung selbst das jeweilige Ablage- oder Tragteil bilden oder das jeweilige Ablage- oder Tragteil haltern kann. Von den in der Zeichnung gezeigten Fällen kann ersteres bei den Ausführungsbeispielen nach den Fig. 6 (Schale) und 8 (Flaschenhalter) verwirklicht sein. Der zweitgenannte Fall kann bei den übrigen Ausführungsbeispielen gegeben sein. Im Falle einer Schale (Fig.6) kann also die Formplatte 32 entsprechend eingewölbt sein. Im Falle der Flaschenhaltereinheit 11 (Fig. 8) ist der gewellte Flaschenhalterbereich 12 Bestandteil der entsprechend geformten Formplatte 32. Aus der Zeichnung geht ferner deutlich hervor, daß die beiden Hintergreifelemente (24,25) von den abgekanteten oder abgebogenen Endbereichen der jeweiligen Formplatte 32 gebildet werden. Die Formplatte 32 weist zweckmäßigerweise einen im wesentlichen rechteckigen Umriß auf.

Die Haltebolzen 19,20 sind zur Befestigung im Bereich der zwischen Unterschrank 33 und Oberschrank 34 befindlichen Nische einer Einbauküche gedacht. Sie können jedoch auch an einer anderen Wandstelle befestigt werden. Dabei ist es im Prinzip möglich, die Haltebolzen unmittelbar an der betreffenden Wand 21 festzulegen. Eine größere Variabilität erhält man wie beim dargestellten Ausführungsbeispiel dadurch, daß den Haltebolzen 19, 20 eine an der Wand 21 zu befestigende Halteschiene 35 zugeordnet ist, mit der das Befestigungsende 36 der Haltebolzen in Schienenlängsrichtung verschiebbar und in der jeweiligen Stellung feststellbar in Eingriff gebracht werden kann. Auf diese Weise ist es möglich, die Haltebolzen sehr schnell an jeder beliebigen Stelle der Halteschiene festzulegen bzw. sie zu verlagern, wenn man den Ablageort der jeweiligen Einheit 1,4,6,8,11,13 bzw. 16 verändern möchte. Auch die Anpassung des Abstandes der Haltebolzen voneinander an die Länge der jeweiligen Einheit, d.h. an den Abstand der Abstützpartien voneinander, ist in gleich einfacher Weise möglich.

Die Halteschiene 35 besteht zweckmäßigerweise aus Metall. Sie weist an ihrer Vorderseite einen nach vorne offenen Führungsschlitz 37 und dahinter einen mit Bezug auf die Schlitzbreite b breiteren Hohlraum 38 auf, der sich über den Schlitz 37 nach außen hin öffnet. Am Befestigungsende 36 der Haltebolzen 19,2o ist ein Endstück 39 vorhanden, das ein mit Bezug auf die Schlitzbreite b größeren Durchmesser aufweisendes Kopfstück 40 besitzt, das bei der Montage, wenn man den betreffenden Haltebolzen an der Halteschiene befestigen will, in den Hohlraum 38 eingesetzt wird, was von der Schienenstirnseite her erfolgen kann. Das Endstück 39 besitzt ferner einen vom Kopfstück 40 abstehenden, kleineren Durchmesser als die Schlitzbreite b aufweisenden und ein Gewinde tragenden Verbindungsbolzen 41, der durch den Führungsschlitz 37 greift und vor der Halteschiene 35 in Gewindeeingriff mit dem in Gebrauchslage von der Halteschiene 35 abstehenden Haltebolzenteil 42 steht. Dabei ist der Verbindungsbolzen 41 stirnseitig in diesen Haltebolzenteil 42 eingeschraubt. Bei der Montage oder zum Verlagern des jeweiligen Haltebolzens an der Führungsschiene schraubt man das Endstück 39 so weit heraus, daß zwische dem Kopfstück 4o und dem Haltebolzenteil 42 ein ausreichend großer Abstand entsteht. Befindet sich der Haltebolzen dann an der gewünschten Stelle, verdreht man das Haltebolzenteil 42 im Sinne eines Aufschraubens auf den Verbindungsbolzen 41. Da die Stirnseite 43 des Haltebolzenteils 42 als Anschlag wirkt, werden bei diesem Aufschrauben des Haltebolzenteils 42 die den über die Schienenlänge durchgehenden Führungsschlitz 37 begrenzenden Schlitzrandbereiche 44,45 zwischen dem Kopfstück 4o und dem Stirnanschlag 43 des Haltebolzenteils 42 verklemmt. Der Haltebolzen hält dann unverrückbar fest. Beim Ausführungsbeispiel ist zwischen die Vorderseite der Halteschiene 35 und die Stirnseite 43 des Haltebolzenteils 42 noch ein Unterlegring 46 zwischengefügt, der größeren Durchmesser als die Schlitzbreite b aufweist.

Der in Gebrauchslage im Führungsschlitz 37 befindliche Verbindungsbolzenbereich 47 ist durch entsprechende unrunde Querschnittsgestalt unverdrehbar im Führungsschlitz gelagert. Beim Ausführungsbeispiel ist er als Vierkant ausgebildet.

Am dem Befestigungsende 36 entgegengesetzten freien Ende der Haltebolzen 19,2o weisen diese ein in Bolzenlängsrichtung hin und her schraubbares, radial vorstehendes Klemmstück 48 auf. Es handelt sich hier wiederum um einen in das Haltebolzenteil 42 eingeschraubten Gewindebolzen, dessen der Stirnseite des Haltebolzenteils 42 vorgelagerter Kopf das Klemmstück 48 bildet. Ist die betreffende Einheit 1,26,8,11,13,16 auf die Haltebolzen 19,20 aufgelegt, kann man das Klemmstück 48 gegen die betreffende Abstützpartie 22,23 schrauben, so daß diese und somit die ganze Einheit an Ort und Stelle festgespannt wird. Hierbei wird die betreffende Abstützpartie hinten gegen die Halteschiene bzw. den Unterlegring 46 gedrückt. Das Klemmstück 48 entspricht im Aussehen dem Unterlegring 46.

Bei den Haltebolzen 19, 2o bzw. bei dessen Haltebolzenteils 42 handelt es sich zweckmäßigerweise um Rundstäbe. Damit man diesen Rundstab beim Aufschrauben auf den Verbindungsbolzen 41 des Endstücks 39 besser greifen kann, kann er seitliche Abflachungen zum Ansetzen eines Werkzeugs besitzen.

Damit die Abstützpartien 22,23 sozusagen sanft und ohne die Gefahr eines Verkratzens auf die Haltebolzen aufgesetzt werden können, können diese radial vorstehende Kunststoffringe 49, 50 tragen, über die die Abstützpartien auf den Haltebolzen aufliegen. Beim Ausführungsbeispiel handelt es sich um O-Ringe aus gummielastischem Material. An jedem Haltebolzen sind zwei solche Ringe mit Abstand zueinander angeordnet.

## Patentansprüche

1. Haltevorrichtung zum Halten von im Haushalt, insbesondere in der Küche, zum Ablegen oder Tragen von Gegenständen zu verwendenden Ablage- oder Tragteilen, beispielsweise ein Schneid- oder Ablagebrett, eine Schale, ein Besteckhalter, ein Messerhalter, ein Papierrollenhalter, ein Flaschenhalter usw. an einer Wand, wobei die Haltevorrichtung für jedes Ablage- oder Tragteil (2) zwei mit horizontalem Abstand an der Wand (21) festzulegende und in Gebrauchslage im wesentlichen rechtwinkelig von der Wand (21) abstehende Haltebolzen (19,2o) enthält, dadurch gekennzeichnet, daß die Haltevorrichtung zwei beiderseits des jeweiligen Ablage- oder Tragteils (2) angeordnete und mit dem jeweiligen Ablage- oder Tragteil (2) zu einer Einheit (1,4,6,8, 11,13,16) verbundene Abstützpartien (22,23) aufweist, wobei die Abstützpartien (22,23) lose auf die Haltebolzen (19,2o) auflegbar sind und ein in Gebrauchslage nach unten gerichtetes, vom jeweils entgegengesetzten Haltebolzen aus gesehen den betreffenden Haltebolzen hintergreifendes Hintergreifelement (24,25) zur seitlichen Lagesicherung des Ablage- oder Tragteils (2) aufweisen, und daß die Unterseite der Hintergreifelemente (24,25) eine Aufstellfläche (26,27) bildet, derart, daß die von dem jeweiligen Ablage- oder Tragteil (2) und den Abstützpartien (22,23) gebildete Einheit (1,4,6,8.11.13.16) unabhängig von den Haltebolzen (19,20) mit den Hintergreifelementen (24,25) auf eine Unterlage, insbesondere auf in einem Schrank an den Seitenwänden (28,29) angeordnete Unterlagenteile (3o,31) wie Leisten od.dgl. stellbar ist.

2. Haltevorrichtung nach Anspruch 1, dadurch gekennzeichnet, daß die Hintergreifelemente (24,25) Handgriffe bilden.

3. Haltevorrichtung nach Anspruch 1oder 2, dadurch gekennzeichnet, daß die Abstützpartien (22,23) zur Bildung der Hintergreifelemente (24,25) abgewinkelte oder abgebogene Querschnittsgestalt aufweisen.

4. Haltevorrichtung nach Anspruch 3, dadurch gekennzeichnet, daß jede Abstützpartie (22,23) eine sich in Gebrauchslage längs des Haltebolzens (19,20) leistenartig erstreckende Längsgestalt aufweist.

5. Haltevorrichtung nach Anspruch 3 oder 4, dadurch gekennzeichnet, daß die Abstützpartien (22,23) aus Metallblech bestehen.

6. Haltevorrichtung nach einem der Ansprüche 1 bis 5, dadurch gekennzeichnet, daß die beiden Abstützpartien (22,23) einstückig an den seitlichen Enden einer zweckmäßigerweise aus Metallblech bestehenden Formplatte (32) angeordnet ordnet sind, die durch entsprechende Formgebung selbst das jeweilige Ablage- oder Tragteil, z.B. eine Schale oder einen Flaschenhalter, bilden oder das jeweilige Ablage- oder Tragteil, z.B. ein Messerhalter, haltern kann.

7. Haltevorrichtung nach Anspruch 6, dadurch gekennzeichnet, daß die Formplatte (32) einen im wesentlichen rechteckigen Umriß aufweist.

8. Haltevorrichtung nach einem der Ansprüche 1 bis 7, dadurch gekennzeichnet, daß den Haltebolzen (19,20) eine an der Wand (21) zu befestigende Halteschiene (35) zugeordnet ist, mit der das Befestigungsende (36) der Haltebolzen in Schienenlängsrichtung verschiebbar und in der jeweiligen Stellung feststellbar in Eingriff bringbar sind.

9. Haltevorrichtung nach Anspruch 8, dadurch gekennzeichnet, daß die Halteschiene (35) einen nach vorne offenen Führungsschlitz (37) und dahinter einen mit Bezug auf die Schlitzbreite (b) breiteren Hohlraum (38) bildet und daß die Haltebolzen (19,2o) an ihrem Befestigungsende (36) ein Endstück (39) mit einem mit Bezug auf die Schlitzbreite (b) größeren Durchmesser besitzenden und in den Hohlraum (38) einzusetzenden Kopfstück (4o) und einem vom Kopfstück (4o) abstehenden, kleineren Durchmesser als die Schlitzbreite (b) besitzenden und ein Gewinde tragenden Verbindungsbolzen (41) aufweisen, der mit dem in Gebrauchslage von der Halteschiene (35) abstehenden Haltebolzenteil (42) in Gewindeeingriff steht und dabei in dieses ein- bzw. aus diesem herausschraubbar ist, wobei das Haltebolzenteil (42) einen stirnseitigen Anschlag (43) bildet, derart, daß die Führungsschlitzrandbereiche (44,45) der Halteschiene (35) zwischen dem Kopfstück (4o) und dem Anschlag (43) verklemmbar sind.

10. Haltevorrichtung nach Anspruch 9, dadurch gekennzeichnet, daß der in Gebrauchslage im Führungsschlitz (37) befindliche Verbindungsbolzenbereich (47) durch entsprechende unrunde Querschnittsgestalt unverdrehbar im Führungsschlitz (37) gelagert ist.

11. Haltevorrichtung nach einem der Ansprüche 1 bis 1o, dadurch gekennzeichnet, daß die Haltebolzen (19,2o) am dem Befestigungsende (36) entgegengesetzten Ende ein in Bolzenlängsrichtung hin und her schraubbares, radial vorstehendes KLemmstück (48) zum Verspannen der aufgelegten Abstützpartie (22,23) aufweisen.

12. Haltevorrichtung nach einem der Ansprüche 1 bis 11, dadurch gekennzeichnet, daß die Haltebolzen (19,2o) radial vorstehende Kunststoffringe aufweisen, über die die Abstützpartien (22,23) auf den Haltebolzen (19,2o) aufliegen.

## Claims

1. Holding device for the holding to a wall of storage or holding elements used in the household, in particular in the kitchen, for the storage or holding of objects, for example a chopping or storage board, a dish, a cutlery tray, a knife holder, a kitchen roll holder, a bottle rack etc., wherein the holding device has for each storage or holding element (2) two fixing pins (19, 20) for fixing to the wall (21) with horizontal clearance and projecting essentially at right-angles from the wall (21) in the position of use, characterized in that the holding device has two support sections (22, 23) on either side of the respective storage or holding element (2) and connected to the respective storage or holding element (2) to form a unit (1,4,6,8,11,13,16), with the support sections (22, 23) being capable of being laid loosely on the fixing pins (19, 20) and having a rear-engaging element (24, 25) to secure the lateral position of the storage or holding element (2), pointing downwards in the position of use and, viewed from the respectively opposite fixing pin, engaging the fixing pin concerned from behind, and that the under side of the rear-engaging element (24, 25) forms a support surface (26, 27) such that the unit (1,4,6,8,11,13,16) formed by the respective storage or holding element (2) and the support sections (22, 23) may, irrespective of the fixing pins (19, 20), be located by the rear-engaging elements (24, 25) on a support, in particular on support elements (30, 31) such at rails or the like on the sides (28, 29) of a cabinet.

2. Holding device according to claim 1, characterized in that the rear-engaging elements (24, 25) form handles.

3. Holding device according to claim 1 or 2, characterized in that the support sections (22, 23) have a bent cross-sectional shape to form the rear-engaging elements (24, 25).

4. Holding device according to claim 3, characterized in that each support section (22, 23) has a rail-like longitudinal shape extending along the fixing pin (19, 20) in the position of use.

5. Holding device according to claim 3 or 4, characterized in that the support sections (22, 23) are of sheet metal.

6. Holding device according to any of claims 1 to 5, characterized in that the two support sections (22, 23) are located in one piece at the side ends of a shaped plate (32) expediently made of sheet metal which, by means of suitable shaping can itself form the respective storage or holding element, e.g. a dish or a bottle-holder, or can hold the respective storage or holding element, e.g. a knife holder.

7. Holding device according to claim 6, characterized in that the shaped plate (32) has an essentially rectangular outline.

8. Holding device according to any of claims 1 to 7, characterized in that assigned to the fixing pins (19, 20) is a mounting rail (35) for fixing to the wall (21) and by which the fixing ends (36) of the fixing pins can be slid along the rail and locked in the respective position.

9. Holding device according to claim 8, characterized in that the mounting rail (35) forms a guide slot (37) open to the front and behind a hollow space (38) which is wider than the slot width (b), and that the fixing pins (19, 20) have at their fixing end (36) an end section (39) with a head section (40) with a greater diameter than the slot width (b), and a threaded connecting pin (41) projecting from the head section (40) and with a smaller diameter than the slot width (b), which is in threaded engagement with the fixing pin section (42) projecting from the mounting rail (35) in the position of use, and at the same time can be screwed in to or out of this section, where in the fixing pin section (42) forms an end stop (43) such that the guide slot edge zones (44, 45) of the mounting rail (35) can be clamped between the head section (40) and the stop (43).

10. Holding device according to claim 9, characterized in that the connecting pin area (47) which is in the guide slot (37) in the position of use, is fixed in the guide slot (37) so as to be incapable of turning, by means of a suitably non-circular cross-sectional shape.

11. Holding device according to any of claims 1 to 10, characterized in that the fixing pins (19, 20) have at the end opposite the fixing end (36) a radially-extending clamping element (48), which can be screwed in and out along the pin, for bracing the support section (22, 23) placed upon it.

12. Holding device according to any of claims 1 to 11, characterized in that the fixing pins (19, 20) have radially-extending plastic rings over which the support sections (22, 23) lie on the fixing pins (19, 20).

## Revendications

1. Dispositif de fixation pour fixer à un mur des pièces de support destinées à être utilisées dans la maison, notamment dans la cuisine, pour y poser ou porter des objets, par exemple une planche à découper ou une tablette, une coupe, un porte-couverts, un bloc porte-couteaux, un distributeur de papier de ménage, un porte-bouteilles etc., sachant que le dispositif de fixation comporte pour chaque pièce de support (2) deux boulons de fixation (19, 20) à fixer au mur (21) avec un écart radial, qui font saillie du mur (21) essentiellement à angle droit en position d'utilisation, caractérisé en ce que le dispositif de fixation présente deux parties d'appui (22, 23) disposées de part et d'autre de la pièce de support (2) et reliées à la pièce de support (2) pour former une unité (1, 4, 6, 8, 11, 13, 16), sachant que les parties d'appui (22, 23) peuvent être posées librement sur les boulons de fixation (19, 20) et présentent un élément d'enclenchement (24, 25) dirigé vers le bas en position d'utilisation, qui, vu depuis le boulon de fixation opposé, est enclenché derrière le boulon de fixation concerné pour assurer la position de la pièce de support (2) par le côté, et en ce que la face inférieure des éléments d'enclenchement (24, 25) forme une surface d'appui (26, 27) de manière à ce que l'unité (1, 4, 6, 8, 11, 13, 16) formée par le support (2) et les parties d'appui (22, 23) puisse être posée, indépendamment des boulons de fixation (19, 20) munis des éléments d'enclenchement (24, 25), sur un support, notamment sur des éléments de support (30, 31) disposés sur les parois latérales (28, 29) d'un placard, tels que des baguettes ou analogues.

2. Dispositif de fixation selon la revendication 1, caractérisé en ce que les éléments d'enclenchement (24, 25) forment des poignées.

3. Dispositif de fixation selon la revendication 1 ou 2, caractérisé en ce que, pour former les éléments d'enclenchement (24, 25), les parties d'appui (22, 23) présentent une section transversale pliée ou courbée.

4. Dispositif de fixation selon la revendication 3, caractérisé en ce que chaque partie d'appui (22, 23) présente une forme longitudinale s'étendant le long du boulon de fixation (19, 20) en position d'utilisation à la manière d'une baguette.

5. Dispositif de fixation selon la revendication 3 ou 4, caractérisé en ce que les parties d'appui (22, 23) sont composées de tôle métallique.

6. Dispositif de fixation selon l'une des revendications 1 à 5, caractérisé en ce que les deux parties d'appui (22, 23) sont disposées d'un seul tenant aux extrémités latérales d'une plaque (32) composée opportunément de tôle métallique, qui, en étant formée en conséquence, peut constituer elle-même la pièce de support, par ex. une coupe ou un porte-bouteilles, ou peut maintenir la pièce de support, par ex. un bloc porte-couteaux.

7. Dispositif de fixation selon la revendication 6, caractérisé en ce que la plaque (32) présente un contour essentiellement rectangulaire.

8. Dispositif de fixation selon l'une des revendications 1 à 7, caractérisé en ce qu'un rail de fixation (35) destiné à être fixé au mur (21) est associé aux boulons de fixation (19, 20), rail au moyen duquel l'extrémité de fixation (36) des boulons de fixation peut être déplacée dans la direction longitudinale du rail et peut être enclenchée pour l'immobiliser dans la position.

9. Dispositif selon la revendication 8, caractérisé en ce que le rail de fixation (35) forme une fente de guidage (37) ouverte vers l'avant et, derrière cette dernière, un espace creux (38) plus large que la largeur (b) de la fente, et en ce que les boulons de fixation (19, 20) présentent à leur extrémité de fixation (36) une partie d'extrémité (39) munie d'une tête (40) dont le diamètre est supérieur à la largeur (b) de la fente et qui est destinée à être insérée dans l'espace creux (38), ainsi que d'un axe de liaison (41) fileté dont le diamètre est inférieur à la largeur (b) de la fente et qui fait saillie de la tête (40), axe de liaison dont le filetage coopère avec la partie de boulon de fixation (42) faisant saillie du rail de fixation (35) en position d'utilisation et qui peut être vissé ou dévissé à l'intérieur de cette partie de boulon de fixation, sachant que la partie de boulon de fixation (42) présente une butée frontale (43) de manière à ce que les zones du bord (44, 45) de la fente de guidage du rail de fixation (35) puissent être bloquées entre la tête (40) et la butée (43).

10. Dispositif de fixation selon la revendication 9, caractérisé en ce que la zone de l'axe de liaison (47) qui se trouve dans la fente de guidage (37) en position d'utilisation est logé dans la fente de guidage (37) de manière à être fixe en rotation grâce à une forme de section non circulaire correspondante.

11. Dispositif de fixation selon l'une des revendications 1 à 10, caractérisé en ce que les boulons de fixation (19, 20) présentent à l'extrémité opposée à l'extrémité de fixation (36) une pièce de serrage (48) faisant saillie radialement et pouvant être vissée en avant et en arrière dans la direction longitudinale du boulon pour serrer la partie d'appui (22, 23) qui y repose.

12. Dispositif de fixation selon l'une des revendications 1 à 11, caractérisé en ce que les boulons de fixation (19, 20) présentent des bagues en matière plastique faisant saillie radialement, par l'intermédiaire desquelles les parties d'appui (22, 23) reposent sur les boulons de fixation (19, 20).
